# EUROPEAN PATENT APPLICATION

(11) **EP 1 449 637 A1**
(43) Date of publication of application: **25.08.2004**
(21) Application number: 04003605.5
(22) Date of filing: 18.02.2004
(51) Int. Cl.: B29C 70/52

(54) **Manufactured product in phenolic resin obtained by pultrusion**

(30) Priority: 21.02.2003 IT MI20030314
(71) Applicant: Branca, Alfonso, 20145 Milano (IT)
(72) Inventor: Branca, Alfonso, 20145 Milano (IT)
(74) Representative: Rapisardi, Mariacristina

(57) **Abstract**

The manufactured product (24) obtained by pultrusion and made from composite material having phenolic resin-based matrix in at least one portion thereof has a cellulose-based coating (15).

## Description

The present invention refers to a manufactured product made from phenolic resin obtained by pultrusion, and to the process for making it.

For some time manufactured products obtained by pultrusion and made from composite material in glass fibres having phenolic resin-based matrix have been known.

One of the drawbacks common to many composite materials, and especially for those composite materials having phenolic resin-based matrix, derives from the retraction of the matrix during polymerisation in the mould, which generates in the resulting manufactured product substantial surface microporosity and substantial surface roughness and consequently the fibrous phase arranged near to the outer surface of the manufactured product protrudes.

The surface microporosity of the manufactured product thus promotes the degrading action of ultraviolet rays with the result that the manufactured product is subjected to a progressive deterioration which penalises its performance until its is quickly rendered unusable.

The surface microporosity of the manufactured product also generates non-negligible friction between the manufactured product and the extrusion mould with the result that the latter is subjected to continuous and inexorable wear.

To at least partially avoid these drawbacks a very fine glass fibre is used that is able to attenuate the surface roughness or the surface projection of the fibres on the manufactured product. However, the use of this type of very fine glass fibre has an enormous impact upon the cost of the end manufactured product.

For this reason, in place of the very fine glass fibre, a bigger and therefore considerably more cost effective glass fibre is used. However, in this case the use of a bigger glass fibre requires that the resin matrix be additived with loads able to attenuate the surface porosity of the manufactured product.

The technical task proposed of the present invention is, therefore, that of realising a manufactured product by pultrusion in glass fibre composite with phenolic resin matrix which allows the aforementioned technical drawbacks of the prior art to be eliminated.

In this technical task a purpose of the invention is that of realising a manufactured product which eliminates the drawbacks due to the shrinking of the phenolic resin during cross-linking. Another purpose is that of realising a manufactured product by pultrusion which does not display surface microporosity or projection of the fibres.

Another purpose of the invention is that of realising a manufactured product that is highly resistant to the degrading action of ultraviolet rays.

Yet another purpose is that of realising a manufactured product with high fireproof capability.

Another purpose of the present finding is that of providing a manufactured product which does not cause the progressive deterioration by wear of the extrusion mould from which it is generated.

A further purpose is that of realising a manufactured product having suitable mechanical and/or chemical and/or physical and/or electrical and/or thermal surface properties which condition its applicational characteristics and therefore its suitability for the uses for which it is intended.

The last but not least purpose of the invention is that of realising a manufactured product by pultrusion that is cost-effective through a simple production process.

The technical task, as well as these and other purposes, according to the present invention, are accomplished by realising a manufactured product obtained by pultrusion and made from composite material in natural and/or synthetic fibres having phenolic resin-based matrix, characterised in that at least one portion thereof has a cellulose-based coating.

Preferably the fibres are glass fibres.

In particular, the phenolic resin intimately impregnates the cellulose fibres, then in the cross-linking process it reacts with the active hydroxy groups of the cellulose, generating a homogeneous product capable of carrying out an effective fireproof action.

The present invention also discloses a pultrusion process for producing a manufactured product in composite in synthetic and/or natural fibres with phenolic resin-based matrix, characterised in that it comprises the following steps:
feeding continuous synthetic and/or natural fibres in a phenolic resin bath for the impregnation of said fibres;
associating a coating of cellulose-based material with at least one portion of at least one of the most outer fibres;
compacting the composite thus coated, shaping and/or sizing the compacted composite and carrying out the finishing of the shaped and/or sized composite.

The coating can be associated with the fibres upstream, downstream or inside the phenolic resin bath and can also be preimpregnated with phenolic resin upstream of the impregnation bath.

The coating can advantageously be associated with a mat of continuous fibres before entry into the resin bath.

Preferably, after the impregnation of the fibres but before compacting the composite is covered with a protective sheet of material resistant to thermal and mechanical stresses. Such a protective sheet allows the coating in cellulose-based material to be protected and the resin to be held when the composite is compacted and then shaped. Such a protective sheet is naturally removed at the end of the shaping of the composite.

Other characteristics of the present invention are defined, moreover, in the subsequent claims.

Further characteristics and advantages of the invention shall become clearer from the description of a preferred but not exclusive embodiment of the manufactured product according to the finding, illustrated for indicating and not limiting purposes in the attached drawings, in which:
Figure 1 schematically shows a closed pultrusion mould for making a manufactured product in accordance with the present finding;
Figure 2 shows a cross section view of a manufactured product in accordance with the present invention; and
Figure 3 schematically shows a further embodiment of a pultrusion apparatus for making a manufactured product in accordance with the present finding.

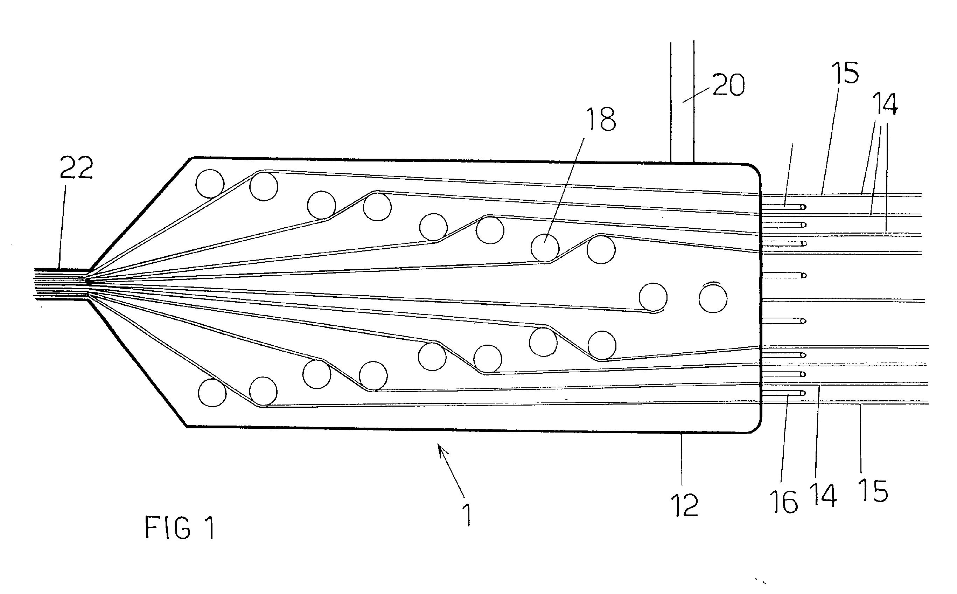

With reference to figure 1, a pultrusion apparatus is shown with the mould closed, wholly indicated with reference numeral 1.

The apparatus 1 comprises a closed controlled temperature mould 12, preferably heated, having multiple inlet openings for the fibres 14, preferably continuous glass fibres, arranged alternately with multiple inlet openings for the phenolic resin 16.

Of course, the phenolic resin can be pure or loaded according to the application.

Outside of the inlet openings for the most outer bands of fibres 14 at least one inlet opening for a coating foil 15 made from cellulose-based material is foreseen.

The heated mould preferably contains impregnated projections such as impregnation pins 18 around which the various bands of fibres 14 and the coating layers 15 pass firstly over and then under (or vice-versa) to promote the impregnation of the resin. Moreover, a detection means 20 of the pressure or volume of the resin in the mould is connected with the mould and a system for controlling pressure or volume can also optionally be included as a part of the apparatus.

The mould also has an outlet opening 22 where the bands of fibres and the impregnated coating layers converge. The inlet openings for the fibres 14 and the coating layers 15 and the outlet opening 22 are sized in such a way that the resin cannot flow back through the inlet openings for the fibres 14 and the coating layers 15.

The apparatus preferably comprises a means for compacting the composite, a means for shaping and/or sizing the compacted composite and preferably a second means for controlling the temperature, and a means for finishing the shaped and/or sized composite.

Advantageously, the compacting means, the shaping and/or sizing means and the finishing means can all be in a single and annexed extrusion apparatus.

In the present embodiment the coating layers 15 are associated with the most outer bands of fibres inside the apparatus.

In a different embodiment of the present finding the coating layers 15 are applied to the most outer bands of fibres upstream or downstream of the apparatus 1.

In a further embodiment of the present finding the coating layers 15 are preimpregnated with resin upstream of the apparatus.

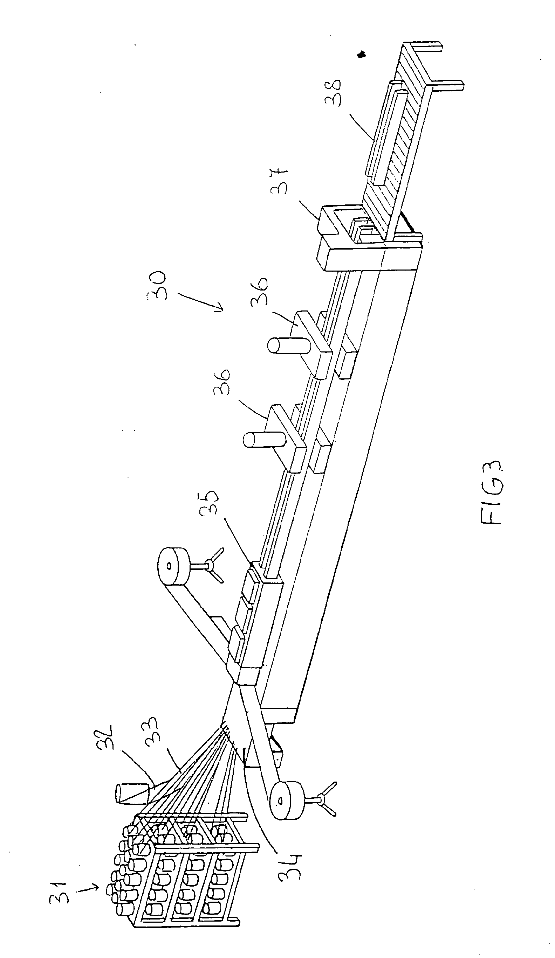

With reference to figure 3, the pultrusion plant wholly indicated with reference numeral 30 comprises a creel 31 in which the glass fibres 33 are housed and guided to the open impregnation bath generically indicated with 34.

A laminar coating 32 of cellulose-based material that unwinds from a relative reel is associated with the upper band of the mass of fibres unwound from the creel 31, before the entry into the impregnation bath 34.

Inside the impregnation bath or tank 34 there are means for impregnating the mass of glass fibre with phenolic resin.

The impregnation means can be defined by impregnation members, not represented, rather than cylinders suitable either for allowing the dipping and divarication of the glass fibre inside the resin, or else by a bathing roller suitable for taking the resin over the glass fibre during its passage.

The plant is also provided with shaping means defined by a pultrusion mould 35 heated to activate the cross-linking of the matrix of the composite.

The plant also foresees a pulling mechanism 36 which can consist of a belted trailer or two alternating trucks in order to ensure continuous movement.

Finally, there is the cutting station 37 in which the profile 38 is cut into the desired length.

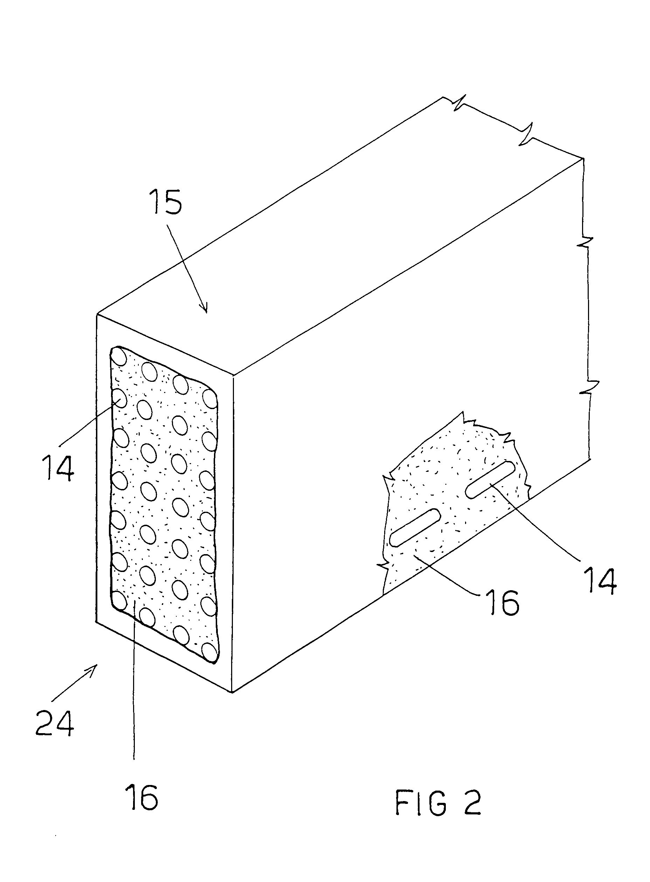

Now with reference to figure 2, the manufactured product 24 resulting from the pultrusion process described above has a pure or loaded phenolic resin-based matrix, and a fibrous phase in long glass fibres.

The coating 15 extends on the whole of the outer surface of the manufactured product 24.

The coating 5 can, however, engage just at least a limited and specified portion of the manufactured product 24.

As can be seen from figure 2, due to the microporosity and roughness of the matrix of the manufactured product 24 some peripheral long fibres 14 can have protruding portions.

In any case, thanks to the coating 15 these delicate portions of protruding fibre are protected by the action of atmospheric agents and in particular by ultraviolet rays.

But this is not all. Thanks to the deep impregnation of the cellulose fibres of the coating 15 with the phenolic resin, the cellulose fibres, which are generally highly flammable in nature, in this way acquire a high flame-retardant capability.

The coating of the composite material, which as an example has been illustrated above in the form of a full foil, equally advantageously can be in the form of a foil of cellulose-based material equipped with a plurality of through holes, in the form of flakes of cellulose-based material, a powder of cellulose-based material, or else in the form of a network of cellulose-based material.

Such a cellulose-based material is preferably paper or card or the like.

Advantageously, at least a portion of the exposed surface of said laminar coating can be made smooth, rough or abrasive or it can be embossed or else it can have many through holes.

Of course, in the case in which the coating is smooth, advantageously the production of the manufactured product does not determine the wear of the extrusion mould.

Finally, it can be foreseen that the material of the cellulose-based coating, if in the form of flakes or powder, can be associated with the impregnated fibres before compacting feeding them through a matrix carrying an impression, through which the coating material is to be passed, having the same shape as that which one wishes the coating to take up on the manufactured product.

The finding thus conceived is susceptible to numerous modifications and variants, all covered by the inventive concept; moreover, all of the details can be replaced with technically equivalent elements.

## Claims

1. Manufactured product obtained by pultrusion and made from composite material in natural and/or synthetic fibres having phenolic resin-based matrix, **characterised in that** at least one portion thereof has a cellulose-based coating.

2. Manufactured product in composite material according to the previous claim, **characterised in that** said coating has flame-retardant properties.

3. Manufactured product in composite material according to one or more of the previous claims, **characterised in that** said fibres are glass fibres.

4. Manufactured product in composite material according to one or more of the previous claims, **characterised in that** said coating is in laminar form.

5. Manufactured product in composite material according to one or more of the previous claims, **characterised in that** said coating is in the form of a foil having a plurality of through holes.

6. Manufactured product in composite material according to one or more of the previous claims, **characterised in that** said coating is in the form of flakes.

7. Manufactured product in composite material according to one or more of the previous claims, **characterised in that** said coating is in the form of a network.

8. Manufactured product in composite material according to one or more of the previous claims, **characterised in that** said coating is in the form of powder.

9. Manufactured product in composite material according to one or more of the previous claims, **characterised in that** said coating is in paper, card or the like.

10. Manufactured product in composite material according to one or more of the previous claims, **characterised in that** at least a portion of the exposed surface of said coating is smooth.

11. Manufactured product in composite material according to one or more of the previous claims, **characterised in that** at least a portion of the exposed surface of said coating is rough.

12. Manufactured product in composite material according to one or more of the previous claims, **characterised in that** at least a portion of the exposed surface of said coating is embossed.

13. Pultrusion process for producing a manufactured product in composite in synthetic and/or natural fibres with phenolic resin-based matrix, **characterised in that** it comprises the following steps:
feeding continuous synthetic and/or natural fibres in a phenolic resin bath for the impregnation of said fibres;
associating a coating of cellulose-based material with at least one portion of at least one of the most outer fibres;
compacting the composite thus coated, shaping and/or sizing the compacted composite and carrying out the finishing of the shaped and/or sized composite.

14. Pultrusion process according to the previous claim, **characterised in that** said coating is associated with the fibres upstream of the impregnation bath.

15. Pultrusion process according to claim 13, **characterised in that** said coating is associated with the fibres downstream of the impregnation bath.

16. Pultrusion process according to claim 13, **characterised in that** said coating is associated with the fibres inside the impregnation bath.

17. Pultrusion process according to one or more of claims 13 and thereafter, **characterised in that** said coating is preimpregnated with phenolic resin upstream of said impregnation bath.

18. Pultrusion process according to one or more of claims 13 and thereafter, **characterised in that** said coating is associated with a mat of continuous fibres before entry into said resin bath.

19. Pultrusion process according to one or more of claims 13 and thereafter, **characterised in that** after the impregnation of the fibres but before compacting the composite is covered with a protective sheet of material resistant to thermal and mechanical stresses, such a protective sheet allowing the coating in cellulose-based material to be protected and the resin to be held when the composite is compacted and then shaped.

20. Pultrusion process according to one or more of claims 13 and thereafter, **characterised in that** the material of the cellulose-based coating, if in the form of flakes or powder, is associated with the impregnated fibres before compacting feeding them through a matrix carrying an impression, through which the coating material is to be passed, having the same shape as that which one wishes the coating to take up on the manufactured product.

21. Use of a cellulose-based material for coating at least a portion of the outer surface of a manufactured product obtained by pultrusion and made from composite material in natural and/or synthetic fibres with phenolic resin-based matrix.

22. Manufactured product in glass fibre composite with phenolic resin matrix and pultrusion process for making it as described and claimed.
